# EUROPÄISCHE PATENTANMELDUNG

(11) **EP 0 836 253 A2**
(43) Veröffentlichungstag der Anmeldung: **15.04.1998**
(21) Anmeldenummer: 97402286.5
(22) Anmeldetag: 30.09.1997
(51) Int. Cl.: H01R 35/02

(54) **Anordnung zum Schutz einer elektrischen Leitung**

(30) Priorität: 11.10.1996 DE 29617702 U
(71) Anmelder: ALCATEL ALSTHOM COMPAGNIE GENERALE D'ELECTRICITE, 75008 Paris (FR)
(72) Erfinder: Schauer, Friedrich, Dipl.-Ing., 90562 Heroldsberg (DE); Czeschka, Martin, Dipl.-Ing., 91177 Thalmässing (DE)
(74) Vertreter: Döring, Roger, Dipl.-Ing.

(57) **Zusammenfassung**

Es wird eine Anordnung zum Schutz einer elektrischen Leitung angegeben, die aus einem elektrischen Gerät herausgeführt ist und an deren freiem Ende ein Kupplungsteil angebracht ist. Die Leitung ist auf ihrer ganzen Länge zwischen Gerät und Kupplungsteil von einem Schlauch aus einem Kunststoffgeflecht umgeben. Der Schlauch ist sowohl im Gerät als auch im Kupplungsteil unabhängig von der Leitung zugfest befestigt. Er schützt die Leitung auf ihrer ganzen Länge und entlastet die Kontaktstellen bei Zugbelastungen.

## Beschreibung

Die Erfindung bezieht sich auf eine Anordnung zum Schutz einer elektrischen Leitung, die aus einem elektrischen Gerät herausgeführt ist und an deren freiem Ende ein Kupplungsteil angebracht ist (DE 195 11 693 A1).

Solche Leitungen sind mit unterschiedlicher Länge bei allen elektrischen Geräten vorhanden, die mittels eines Steckers an eine Spannungsquelle anschließbar sind, beispielweise an eine Steckdose im 230 V-Wechselstromnetz. Zum Schutz der Kontaktstellen, an denen die Leiter der Leitungen elektrisch leitend angeschlossen sind, werden die Leitungen in der Regel sowohl im elektrischen Gerät als auch im Kupplungsteil zugentlastet festgelegt. Oft sind auch noch als Knickschutz für die Leitungen dienende Bauteile vorhanden, die beispielweise als speziell geformte Tüllen ausgeführt sind (DE 91 07 726 U1).

Aus der eingangs erwähnten DE 195 11 693 A1 gehen relativ kurze elektrische Leitungen hervor, die aus einem am Lenkstock eines Kraftfahrzeugs befestigten Federgehäuse herausragen und an ihren Enden Stecker aufweisen. Über die Leitungen werden Signale übertragen, die beispielweise zum Auslösen eines Airbags oder zum Betätigen einer Hupe oder eines Radios dienen. Die Stecker der flexiblen Leitungen sind in Gegensteckern am Lenkrad des Kraftfahrzeugs aufgenommen Sowohl bei der Montage als auch beim Betrieb des Kraftfahrzeugs sind die Leitungen erheblichen mechanischen Beanspruchungen ausgesetzt. Ein Schutz der Leitungen gegen mögliche Beschädigungen ist bei dieser bekannten Anordnung nicht vorgesehen.

Der Erfindung liegt die Aufgabe zugrunde, die eingangs geschilderte Anordnung so zu gestalten, daß die Leitungen auf einfache Weise wirksam gegen Beschädigungen durch mechanische Beanspruchungen geschützt sind.

Diese Aufgabe wird gemäß der Erfindung dadurch gelöst,
- daß die Leitung auf ihrer ganzen Länge zwischen Gerät und Kupplungsteil von einem Schlauch aus einem Kunststoffgeflecht umgeben ist und
- daß der Schlauch sowohl im Gerät als auch im Kupplungsteil unabhängig von der Leitung zugfest befestigt ist.

Durch den Schlauch ist die Leitung auf ihrer ganzen Länge gegen mechanische Beschädigungen geschützt. Das ist besonders dann von Vorteil, wenn die Leitung mechanisch nicht besonders stabil und beispielweise als Flachbandleitung ausgeführt ist. Die Leitung ist außerdem an beiden Enden zugentlastet angeschlossen, da der aus einem Kunststoffgeflecht bestehende und damit sehr stabile Schlauch sowohl im Gerät als auch im Kupplungsteil unabhängig von der Leitung festgelegt ist. In axialer Richtung zwischen Gerät und Kupplungsteil wirkende Kräfte werden daher vollständig vom Schlauch abgefangen. Zur einfachen Anbringung des Schlauches kann derselbe so über die Leitung gezogen werden, daß dieselbe in beiden Endbereichen seitwärts aus demselben herausragt. Dazu kann der Schlauch in diesen Endbereichen quer zu seiner Längsrichtung verlaufende Schlitze haben. Die über die Austrittsstellen der Leitungen hinausragenden Enden des Schlauches werden beispielweise durch Klemmung oder durch Ultraschall im Gehäuse und im Kupplungsteil befestigt.

Ein Ausführungsbeispiel des Erfindungsgegenstandes ist in den Zeichnungen dargestellt.

Es zeigen:

Fig. 1 in schematischer Darstellung eine Anordnung nach der Erfindung.

Fig. 2 einen Schnitt durch Fig. 1 längs der Linie II - II in vergrößerter Darstellung.

Fig. 3 ein Ende einer in der Anordnung nach der Erfindung einsetzbaren Leitung.

Fig. 4 eine an einem Kupplungsteil befestigte Leitung.

Mit 1 ist ein elektrisches Gerät bezeichnet, aus dem eine elektrische Leitung 2 herausgeführt ist. Das Gerät 1 ist an sich beliebig Es handelt sich beispielsweise um eine Kassette, in welcher eine Leitung zur Stromübertragung für den Airbag eines Kraftfahrzeugs aufgewickelt ist. Am freien Ende der Leitung 2 ist ein Kupplungsteil 3 angebracht, bei dem es sich beispielweise um einen Stecker handelt. Es dient beispielweise zum Anschluß der Leitung 2 an einen Generator. Der Aufbau der Leitung 2 und die Anzahl ihrer Leiter sowie die Gestaltung des Kupplungsteils 3 sind beliebig. Das Kupplungsteil 3 kann in konfektionierter Ausführung an das Ende der Leitung 2 angespritzt sein. Es kann aber auch mit mindestens zwei Teilen montierbar ausgeführt sein. Die Kontaktelemente des Kupplungsteils 3 und der Anschluß der Leitung 2 im Gerät 1 sind der Einfachheit halber nicht dargestellt.

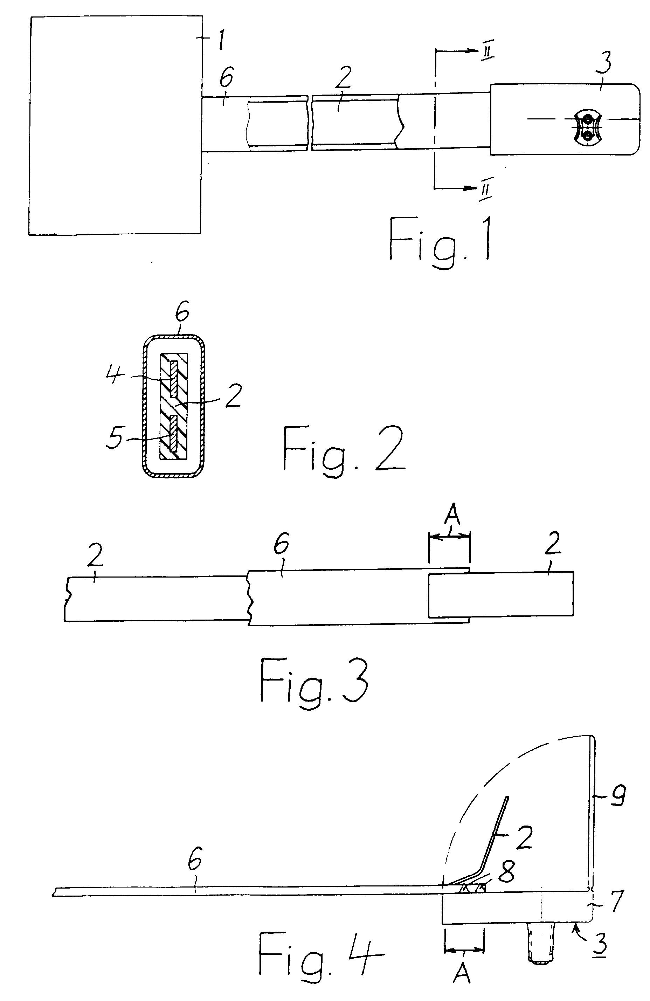

Die Leitung 2 ist gemäß Fig. 2 beispielsweise als Flachbandleitung mit zwei flachen Leitern 4 und 5 ausgebildet. Sie ist auf ihrer ganzen Länge zwischen Gerät 1 und Kupplungsteil 3 von einem Schlauch 6 umgeben. Der Schlauch 6 besteht aus einem Kunststoffgeflecht. Als Materialien sind beispielweise Polyamid und Polyester geeignet.

Die Enden der Leitung 2 sind seitlich aus dem Schlauch 6 herausgeführt, so wie es in Fig. 3 für ein Leitungsende dargestellt ist. Der Schlauch 6 hat also an beiden Enden einen Abschnitt A, in dem keine Leitung 2 enthalten ist. Der Abschnitt A dient jeweils zur Festlegung des Schlauches 6 am Gerät 1 und am Kupplungsteil 3, so wie es in Fig. 4 für das Kupplungsteil 3 angedeutet ist. Das Kupplungsteil 3 besteht beispielweise aus zwei zusammenfügbaren Teilen, von denen in Fig. 4 nur ein Teil 7 dargestellt ist. Zur Befestigung des Schlauches 6 am Kupplungsteil 3 hat dessen Teil 7 beispielsweise Vorsprünge 8, welche bei montiertem Schlauch 6 in dessen flach gemachten Abschnitt A eindringen. Der Schlauch 6 wird dann bei Anbringung des zweiten Teils des Kupplungsteils 3, bei dem es sich beispielsweise um einen Deckel 9 handelt, in demselben festgeklemmt. Er kann vorher gegebenenfalls auch durch Ultraschall mit dem Teil 7 verschweißt werden, wobei die Vorsprünge 8 eingeebnet werden.

Die Anordnung nach der Erfindung wird beispielsweise wie folgt montiert:

In einen der Länge der Leitung 2 angepaßten Schlauch 6 werden in beiden Endbereichen quer zu seiner Längsrichtung verlaufende Schlitze geschnitten. Dann wird die Leitung 2 in den Schlauch 6 so eingezogen, daß ihre beiden Enden entsprechend Fig. 3 seitlich aus dem Schlauch 6 herausragen. Die beiden Abschnitte A an den Enden des Schlauches 6 werden dann am Gerät 1 einerseits und am Kupplungsteil 3 andererseits befestigt Dabei können die Enden der Leitung 2, so wie in Fig. 4 angedeutet, so abgebogen sein, daß die Befestigung des Schlauches 6 nicht behindert wird.

Anschließend werden die Leiter 4 und 5 der Leitung 2 mit den jeweiligen Kontaktelementen elektrisch leitend verbunden. Dabei kann der bereits befestigte Schlauch 6 durch Aufbringung einer Zugbelastung vorgespannt werden. Die Leitung 2 liegt dann in der fertiggestellten Anordnung lose, mit einer geringfügigen Überlänge im Schlauch 6. Zugbelastungen können dann nicht auf die Leitung 2 einwirken. Zum Schluß werden das Gerät 1 verschlossen und das Kupplungsteil 3 fertiggestellt.

## Patentansprüche

1. Anordnung zum Schutz einer elektrischen Leitung, die aus einem elektrischen Gerät herausgeführt ist und an deren freiem Ende ein Kupplungsteil angebracht ist, dadurch gekennzeichnet,
- daß die Leitung (2) auf ihrer ganzen Länge zwischen Gerät (1) und Kupplungsteil (3) von einem Schlauch (6) aus einem Kunststoffgeflecht umgeben ist und
- daß der Schlauch (6) sowohl im Gerät (1) als auch im Kupplungsteil (3) unabhängig von der Leitung (2) zugfest befestigt ist.

2. Anordnung nach Anspruch 1, dadurch gekennzeichnet, daß der Schlauch (6) in vorgespanntem Zustand in Gerät (1) und Kupplungsteil (3) befestigt ist.

3. Anordnung nach Anspruch 1 oder 2, dadurch gekennzeichnet, daß der Schlauch (6) im Gerät (1) und/oder im Kupplungsteil (3) eingeklemmt ist.

4. Anordnung nach Anspruch 1 oder 2, dadurch gekennzeichnet, daß der Schlauch (6) mittels Ultraschalls mit dem Gerät (1) und/oder dem Kupplungsteil (3) verschweißt ist.
